# EUROPÄISCHE PATENTSCHRIFT

(11) **EP 0 718 735 B1**
(45) Veröffentlichungstag und Bekanntmachung des Hinweises auf die Patenterteilung: **22.12.1999**
(21) Anmeldenummer: 95101216.0
(22) Anmeldetag: 30.01.1995
(51) Int. Cl.: G05D 5/03, B05C 11/10

(54) **Verfahren und Vorrichtung zum Bestimmen der auf einer Flächeneinheit vorliegenden Menge eines Klebstoffes sowie Verfahren und Vorrichtung zum Steuern der auf eine Flächeneinheit aufzutragenden Menge eines Klebstoffes**
Method and device for determining the quantity of adhesive present on a surface and method and device for controlling the quantitiy of adhesive to be applied on the surface
Procédé et dispositif de détermination de la quantité d'adhésif présente sur une surface ainsi que procédé et dispositif de commande de la quantité d'adhésif à appliquer sur cette surface

(30) Priorität: 04.01.1995 DE 19500073; 23.12.1994 DE 4446283
(43) Veröffentlichungstag der Anmeldung: 26.06.1996
(73) Patentinhaber: Findlay Industries Deutschland GmbH, 82538 Geretsried (DE)
(72) Erfinder: Urmann, Reinhardt, D-93142 Maxhütte-Haidhof (DE)
(74) Vertreter: Jönsson, Hans-Peter, Dr.Dipl.-Chem.

(56) Entgegenhaltungen:
- FR-A- 2 682 757
- GB-A- 2 220 065
- US-A- 4 549 079
- US-A- 4 831 258
- US-A- 4 935 261
- US-A- 5 026 989

## Beschreibung

Die Erfindung betrifft ein Verfahren zum Steuern der auf eine Flächeneinheit aufzutragenden Menge eines Klebstoffes mit flüchtigem Anteil oder eines Heißschmelz-Klebstoffes und eine entsprechende Steuervorrichtung.

Um sicherzustellen, daß sich eine bestimmte Menge an Klebstoff auf einer Unterlage befindet, mit der ein weiteres Werkstück verklebt werden soll, genügt es oftmals nicht, vorab eine bestimmte Klebstoffmenge bereitzustellen und diese dann auf die Fläche aufzutragen. Poröse oder kapillare Unterlagematerialien nehmen beispielsweise einen Teil des aufgetragenen Klebstoffes in sich auf, so daß er für den eigentlichen Klebeprozeß nicht mehr in der ausreichenden Menge zur Verfügung steht. Dieses Problem stellt sich insbesondere dann, wenn auf Träger aus Vliesmaterialien, wie sie beispielsweise als Auskleidungsteile für Kraftfahrzeuge verwendet werden, Folien oder Dekormaterialien aufkaschiert werden sollen.

Bisher hat man sich damit beholfen, den Klebstoffauftrag visuell zu beurteilen. Um die Abschätzung möglichst genau vornehmen zu können, wird dabei der Klebstoff mit einem Farbzusatz versehen, so daß dann aus der Intensität der Färbung auf die Dicke der Klebstoffschicht geschlossen werden kann. Abgesehen davon, daß sich eine solche Einfärbung bei dem fertigen Produkt als äußerst störend erweisen kann, erfordert diese Vorgehensweise eine große Erfahrung der Person, die die Beurteilung durchführt. Bei neutraler Einfärbung, insbesondere für helle Teile, ist eine Beurteilung des Klebstoffauftrags trotzdem so gut wie ausgeschlossen.

US-A-4,831,258 beschreibt ein Verfahren zum Bestimmen der auf einer Flächeneinheit vorliegenden Menge eines Klebstoffs mit flüchtigem Anteil. Die Menge wird mittels einer zuvor für den Klebstoff erstellten Eichkurve ermittelt. Da die Temperaturdifferenz zu der Menge im Verhältnis steht, ermittelt der Fachmann einen Verstärkungsfaktor, der dem Klebstoff angepaßt ist.

Zudem steht diese Vorgehensweise auch einer Automatisierung des Klebstoffauftrages entgegen.

Es ist daher die Aufgabe der vorliegenden Erfindung, ein Verfahren so wie eine Vorrichtung zum Bestimmen der auf einer Flächeneinheit vorliegenden Menge eines Klebstoffes zur Verfügung zu stellen, das automatisch durchgeführt werden kann und auch die Möglichkeit eröffnet, den Klebstoffauftrag auf ein Werkstück zu automatisieren.

Die heute in großem Umfang verwendeten Klebstoffe weisen oftmals einen flüchtigen Anteil auf, der beispielsweise aus leichtflüssigen organischen Lösungsmitteln besteht.

Für solche Klebstoffe wird die obige Aufgabe durch ein Verfahren nach Patentanspruch 1 so wie eine Vorrichtung nach Patentanspruch 5 gelöst.

Eine andere Klasse von Klebstoffen sind die Heißschmelz-Klebstoffe, die heiß auf die zu verklebenden Bereiche aufgetragen werden und nach dem Abkühlen ihre Klebkraft entfalten.

Für diese Klebstoffe wird die obige Aufgabe durch ein Verfahren nach Patentanspruch 2 so wie eine Vorrichtung nach Patentanspruch 5 gelöst.

Erfindungsgemäß ist einerseits vorgesehen, daß die sich aus der Verdunstungskälte des flüchtigen Anteils des Klebstoffes ergebende Temperatur oder die Temperaturdifferenz zur Umgebung auf der Flächeneinheit erfaßt und mittels einer zuvor für den Klebstoff erstellten Eichkurve die Menge an auf der Flächeneinheit vorliegendem Klebstoff ermittelt wird.

Für Heißschmelz-Klebstoffe wird die sich aus der Abstrahlungswärme des heiß aufgetragenen Klebstoffes ergebende Temperatur oder Temperaturdifferenz zur Umgebung erfaßt und ansonsten wie zuvor verfahren.

Dabei ist sowohl eine flächenartige Erfassung als auch eine punktartige Erfassung der Meßgrößen möglich. Beispielsweise kann vorgesehen sein, daß die Temperaturen oder Temperaturpunktartige Erfassung der Meßgrößen möglich. Beispielsweise kann vorgesehen sein, daß die Temperaturen oder Temperaturdifferenzen auf mehreren punktartigen Bereichen der Flächeneinheit gemessen werden. Für die Auswertung kann dann entweder die Einzel information herangezogen werden oder aber, beispielsweise durch eine Mittelwertbildung, eine Abschätzung für die gesamte Flächeneinheit getroffen werden.

Bei einem Verfahren zum Steuern der auf eine Flächeneinheit aufzutragenden Menge eines Klebstoffes mit flüchtigem Anteil oder eines Heißschmelz-Klebstoffes kann nun so vorgegangen werden, daß eine vorgebbare minimale Menge des Klebstoffes auf die Flächeneinheit aufgetragen wird, daß die sich aus der Verdunstungskälte des flüchtigen Anteils bzw. der Abstrahlungswärme des Heißschmelz-Klebstoffes ergebende Temperatur oder Temperaturdifferenz zur Umgebung auf der Flächeneinheit erfaßt und mittels einer zuvor für den Klebstoff erstellten Eichkurve die Ist-Menge an auf der Flächeneinheit vorliegendem Klebstoff ermittelt wird, daß die Ist-Menge mit einer zuvor festgelegten Soll-Menge verglichen wird und daß die sich aus dem Vergleich ergebende Differenzmenge an Klebstoff auf die Flächeneinheit aufgetragen wird.

Bei kritischen Materialien kann dieses Verfahren wiederholt angewendet werden, bis die erforderliche Menge an Klebstoff aufgetragen ist. Im allgemeinen wird es aber ausreichend sein, das Verfahren pro Flächeneinheit nur einmal ablaufen zu lassen.

Das eben beschriebene Steuerungsverfahren bietet die Möglichkeit, ein Temperaturprofil der gesamten Unterlage, auf die Klebstoff aufgetragen worden ist, zu erstellen und dann gezielt in einem automatisierten Verfahren Klebstoff nachträglich aufzubringen.

Dabei muß die Unterlage nicht eben sein, auch bei dreidimensionaler Ausbildung der Unterlage, wie sie beispielsweise bei Kraftfahrzeughimmeln oder Türinnenverkleidungen anzutreffen ist, liefern sowohl das Bestimmungsverfahren als auch das darauf basierende Steuerungsverfahren gute Ergebnisse.

In vielen Anwendungsfällen wird es auch möglich sein, Toleranzen für die Soll-Menge zuzulassen, wobei nur dann zusätzlich Klebstoff aufgetragen wird, wenn die ermittelte Ist-Menge an Klebstoff außerhalb des Toleranzbereiches liegt.

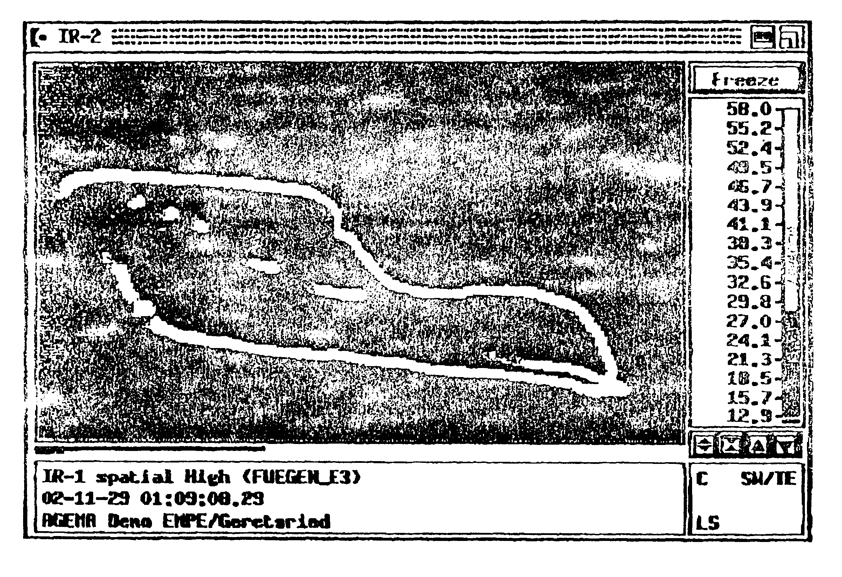

Die beigefügte Abbildung zeigt eine in Grautöne umgesetzte Farbdarstellung eines Temperaturprofils einer mit einem Heißschmelz-Klebstoff versehenen Unterlage, das mittels einer in der Bauindustrie üblichen Wärmebildkamera aufgenommen worden ist. Die hellen Bereiche sind die Bereiche hoher Abstrahlungswärme, also solche, auf die eine relativ große Menge an Klebstoff aufgetragen ist bzw. auf denen die Schichtdicke des Klebstoffes groß ist. Die hohe Abstrahlungswärme geht mit einer hohen Temperatur einher, wie sie am rechten Bildrand der Abbildung skaliert ist. Aus dem Profil ergeben sich deutlich die verschiedenen Schichtdicken an den unterschiedlichen Stellen der Unterlage bzw. die dort aufgetragenen Klebstoffmengen.

Es hat sich dabei gezeigt, daß die Verdunstungskälte bzw. die Abstrahlungswärme bei den üblicherweise aufgetragenen Schichtdicken in etwa proportional zur Verdunstungskälte bzw. Abstrahlungswärme und damit zur ermittelten Temperatur bzw. der Temperaturdifferenz zur Umgebung ist. Dies beschleunigt die Auswertung, so daß ein schnelles und effizient arbeitendes Steuerverfahren zur Verfügung steht.

Die in der vorstehenden Beschreibung so wie in den Ansprüchen und in der Abbildung offenbarten Merkmale der Erfindung können sowohl einzeln als auch in beliebiger Kombination für die Verwirklichung der Erfindung in ihren verschiedenen Ausführungsformen wesentlich sein.

## Patentansprüche

1. Verfahren zum Steuern der auf eine Flächeneinheit aufzutragenden Menge eines Klebstoffs, dadurch gekennzeichnet, daß man
eine vorgebbare Minimalmenge des Klebstoffs auf die Flächeneinheit aufträgt,
die sich ergebende Temperatur oder Temperaturdifferenz zur Umgebung auf der Flächeneinheit erfaßt und mittels einer zuvor für den Klebstoff erstellten Eichkurve die Istmenge an auf der Flächeneinheit vorliegendem Klebstoff ermittelt,
die Istmenge mit einer zuvor festgelegten Sollmenge vergleicht und
die sich aus dem Vergleich ergebende Differenzmenge an Klebstoff auf die Flächeneinheit aufträgt.

2. Verfahren nach Anspruch 1, dadurch gekennzeichnet, daß man die sich ergebende Temperatur oder Temperaturdifferenz zur Umgebung auf der Flächeneinheit durch Bestimmung der Verdunstungskälte eines Klebstoffs mit flüchtigem Anteil bestimmt.

3. Verfahren nach Anspruch 1, dadurch gekennzeichnet, daß man die sich ergebende Temperatur oder Temperaturdifferenz zur Umgebung auf der Flächeneinheit durch Bestimmung der Abstrahlungswärme des heißaufgetragenen Heißschmelz-Klebstoffs bestimmt.

4. Verfahren nach Anspruch 1, dadurch gekennzeichnet, daß für die Sollmenge eine maximal zulässige Abweichung festgelegt wird und nur dann zusätzlich Klebstoff auf die Flächeneinheit aufgetragen wird, wenn die ermittelte Istmenge an Klebstoff geringer ist als die um die Abweichung korrigierte Sollmenge.

5. Vorrichtung zum Steuern der auf eine Flächeneinheit aufzutragenden Menge eines Klebstoffs, dadurch gekennzeichnet, daß sie eine Aufgabeeinrichtung zum Auftragen einer vorgebbaren Minimalmenge des Klebstoffs auf die Flächeneinheit, eine Wärmebildkamera, eine Meßvorrichtung zur Ermittlung einer zuvor für den Klebstoff erstellten Eichkurve der Istmenge an auf der Flächeneinheit vorliegendem Klebstoff in Form eines Pyrometers oder einer Temperatursensoranordnung aufweist, welche eine Temperatur oder Temperaturdifferenz zur Umgebung auf der Flächeneinheit repräsentatives Signal an eine Auswerteeinrichtung zum Ermitteln einer Istmenge an auf die Flächeneinheit aufgetragenen Klebstoff gibt, und daß weiterhin eine Vergleichseinrichtung vorgesehen ist, die die Istmenge mit einer zuvor festgelegten Sollmenge vergleicht und ein für die sich aus dem Vergleich ergebende Differenzmenge an Klebstoff, die noch auf die Flächeneinheit aufzutragen ist, repräsentatives Signal ausgibt.

## Claims

1. A process for controlling the amount of an adhesive to be applied to a unit area, characterized in that
a presettable minimum amount of adhesive is applied to the unit area;
the resulting temperature or temperature difference to the environment on the unit area is detected and the actual amount of the adhesive present on the unit area is determined by means of a previously established calibration curve for the adhesive;
the actual amount is compared with a required amount specified previously; and
the differential amount of adhesive resulting from the comparison is applied to the unit area.

2. The process according to claim 1, characterized in that the resulting temperature or temperature difference to the environment on the unit area is determined by determining the cold due to evaporation of an adhesive having a volatile portion.

3. The process according to claim 1, characterized in that the resulting temperature or temperature difference to the environment on the unit area is determined by determining the emission of heat of the hot melt adhesive applied hot.

4. The process according to claim 1, characterized in that a maximum permissible deviation is specified for the required amount and adhesive is additionally applied to the unit area only if the determined actual amount of adhesive is smaller than the required amount corrected by the deviation.

5. A device for controlling the amount of an adhesive to be applied to a unit area, characterized in that it comprises a charging device for applying a presettable minimum amount of adhesive to the unit area, a thermal image camera, a measuring device for determining by means of a previously established calibration curve the actual amount of the adhesive present on the unit area in the form of a pyrometer or a temperature sensor array transmitting a signal representing a temperature or a temperature difference to the environment on the unit area to an evaluation unit for determining an actual amount of the adhesive applied to the unit area, and furthermore there is provided a comparing device which compares the actual amount with a required amount specified previously and outputs a signal representing the differential amount of adhesive still to be applied to the unit area.

## Revendications

1. Procédé de commande de la quantité d'un adhésif à appliquer sur une surface, caractérisé en ce que
l'on applique sur la surface une quantité minimale pouvant être spécifiée de l'adhésif,
l'on enregistre sur la surface la température en découlant ou la différence de température par rapport à l'environnement et l'on détermine. au moyen d'une courbe d'étalonnage élaborée au préalable pour l'adhésif, la quantité instantanée d'adhésif présent sur la surface,
l'on compare la quantité instantanée à une quantité théorique fixée au préalable, et en ce que
l'on applique sur la surface la différence de quantité d'adhésif découlant de la comparaison.

2. Procédé selon la revendication 1, caractérisé en ce que l'on détermine sur la surface la température obtenue ou la différence de température par rapport à l'environnement par détermination du froid à l'évaporation d'un adhésif comportant une fraction volatile.

3. Procédé selon la revendication 1, caractérisé en ce que l'on détermine sur la surface la température obtenue ou la différence de température par rapport à l'environnement par détermination de la chaleur de dissipation de la colle thermofusible appliquée à chaud.

4. Procédé selon la revendication 1, caractérisé en ce que l'on fixe pour la quantité théorique une déviation maximale autorisée et que l'on n'applique alors de l'adhésif supplémentaire sur la surface que lorsque la quantité instantanée enregistrée d'adhésif est plus faible que la quantité théorique corrigée de la déviation.

5. Dispositif de commande de la quantité d'un adhésif à appliquer sur une surface, caractérisé en ce qu'il présente un dispositif d'alimentation permettant d'appliquer une quantité minimale pouvant être spécifiée de l'adhésif sur la surface, une caméra thermique, un dispositif de mesure permettant de déterminer, au moyen d'une courbe d'étalonnage, élaborée au préalable pour l'adhésif, la quantité instantanée d'adhésif présent sur la surface, sous la forme d'un pyromètre ou d'un dispositif de détection de la température, lequel dispositif donne à un dispositif d'évaluation permettant de déterminer une quantité instantanée d'adhésif appliqué sur la surface un signal représentant une température ou une différence de température par rapport à l'environnement sur la surface, et en ce qu'il est en outre prévu un dispositif comparateur qui compare la valeur instantanée à une valeur théorique définie au préalable et donne en sortie un signal représentatif de la différence de quantité d'adhésif résultant de la comparaison, laquelle quantité doit encore être appliquée sur la surface.
